# EUROPÄISCHE PATENTSCHRIFT

(11) **EP 4 212 751 B1**
(45) Veröffentlichungstag und Bekanntmachung des Hinweises auf die Patenterteilung: **04.03.2026**
(21) Anmeldenummer: 23150847.4
(22) Anmeldetag: 10.01.2023
(51) Int. Cl.: F16C 33/46, F16C 33/38

(54) **LAGERKÄFIG**
BEARING CAGE
CAGE DE PALIER

(30) Priorität: 13.01.2022 DE 102022200327
(43) Veröffentlichungstag der Anmeldung: 19.07.2023
(73) Patentinhaber: Aktiebolaget SKF, 415 50 Göteborg (SE)
(72) Erfinder: Beyfuss, Berthold, 97535 Wasserlosen-Kaisten (DE); Friedrich, Hans-Jürgen, 97486 Königsberg-Römershofen (DE); Radina, Alfred, 97711 Poppenlauer (DE); Soellner, Maximilian, 97494 Bundorf (DE); Schierling, Jonas, 97437 Hassfurt (DE); Kemmer, Martin, 97440 Werneck (DE)
(74) Vertreter: Kuhstrebe, Jochen

(56) Entgegenhaltungen:
- DE-A1- 102008 034 922
- DE-A1- 102009 034 018
- DE-A1- 102017 117 010
- DE-A1- 102017 127 529
- JP-A- 2008 215 390
- JP-A- 2009 243 556
- US-A1- 2012 170 883

## Beschreibung

Vorliegende Erfindung betrifft einen Lagerkäfig gemäß Patentanspruch 1.

In Wälzlagern werden oftmals Wälzlagerkäfige eingesetzt, um die Wälzköper zu führen und gleichmäßig zu beabstanden. Dazu kann ein Teil des Wälzlagerkäfigs auch als Abstandshalter zwischen den Wälzkörpern dienen. Abhängig von der Größe der Wälzkörper kann dafür gerade in Zonen, in denen die Wälzkörper Kontakt mit dem Wälzlagerkäfig haben, eine gewisse Materialstärke beim Wälzlagerkäfig notwendig sein, um sowohl den Abstand zwischen den Wälzkörpern zu kompensieren als auch, insbesondere bei großen Wälzkörpern, dem Gewicht eines Wälzkörpers standhalten zu können. Diese notwendige Materialstärke kann jedoch bei der Herstellung von Wälzkörperkontaktzonen aufgrund der dazu notwendigen hohen Kräfte nur schwer umzuformen sein.

Üblicherweise ist ein Wälzlagerkäfig für ein spezielles Wälzlager ausgelegt, so dass es selbst bei einer kleinen Änderung der Wälzkörpergeometrie, wie zum Beispiel einer geänderten Wälzkörperlänge, notwendig sein kann, den gesamten Wälzlagerkäfig neu zu gestalten und/oder auszutauschen. Auch kann sich die Anforderung an eine Schmierstoffversorgung aufgrund geänderter Wälzkörpergeometrien ändern, was unter Umständen Änderungen an dem Wälzlagerkäfig erfordert.

JP 2009 243556 A beschreibt einen Lagerkäfig mit Taschen, in die ein Rahmen eingesetzt ist, der mit Gleitabschnitten für einen in der Tasche aufgenommenen Wälzkörper versehen ist. Ein weiterer gattungsgemäßer Lagerkäfig ist aus DE 10 2008 034922 A1 bekannt.

Es ist Aufgabe vorliegender Erfindung, einen Lagerkäfig bereitzustellen, der einfach und flexibel an verschiedene Wälzkörpergeometrien und/oder Anforderungen an den Wälzlagerkäfig anpassbar ist.

Diese Aufgabe wird durch einen Lagerkäfig gemäß Patentanspruch 1 gelöst.

Im Folgenden wird ein Lagerkäfig, insbesondere für Großwälzlager, mit einem ersten und einem zweiten Seitenteil und mehreren die Seitenteile verbindenden Stegelementen vorgeschlagen, wobei die Seitenteile und die Stegelemente Käfigtaschen bilden, die dazu ausgelegt sind, Wälzkörper aufzunehmen. Das Wälzlager kann insbesondere ein Rollenlager sein, d.h. ein Wälzlager mit rollenförmigen Wälzkörpern, wie zum Beispiel Kegelrollen, Zylinderrollen, Tonnen, Nadeln, und dergleichen. Bevorzugt ist der Lagerkäfig aus Metall, insbesondere Metallblech, und/oder aus Kunststoff gebildet. Ferner kann der Lagerkäfig aus einem massiven Material gebildet sein. Alternativ oder zusätzlich kann der Lagerkäfig einteilig oder mehrteilig ausgebildet sein.

Um den Lagerkäfig einfach und flexibel an verschiedene Wälzkörpergeometrien und/oder Anforderungen anpassen zu können, weisen die Stegelemente zumindest eine Ausnehmung auf, die als eine Aussparung oder Ausklinkung ausgebildet ist, die sich durch die gesamte Wanddicke des jeweiligen Stegelements erstreckt. In der Ausnehmung ist ein Einlageelement aufgenommen, das dazu ausgelegt ist, die in den Taschen aufgenommenen Wälzkörper zu kontaktieren. Weiterhin weist das Einlageelement Wälzkörperanlageflächen auf, die im Gebrauch jeweils den in den Taschen aufgenommenen Wälzkörpern zugewandt sind und im Bereich der Wälzkörperanlageflächen mit einer Krümmung versehen sind.

Zusätzlich können gemäß einem weiteren vorteilhaften Ausführungsbeispiel auch in dem ersten und/oder zweiten Seitenteil Ausnehmungen vorgesehen sein, in der weitere Einlegeelemente aufgenommen sind.

Mit anderen Worten bilden das erste und zweite Seitenteil bzw. Seitenelement und das zumindest eine Stegelement ein Käfiggrundgerüst, das mit Hilfe der Einlageelementr an unterschiedliche Ausgestaltungen für einen Lagerkäfig angepasst werden kann. Dadurch kann beispielsweise das gleiche Käfiggrundgerüst für verschiedene Wälzkörper verwendet werden, wobei lediglich das Einlageelement ausgetauscht wird. Ferner hat das Einlageelement auch den Vorteil, dass das erste und/oder zweite Seitenteil und/oder das zumindest eine Stegelement dünner gestaltet werden kann, da jegliche Abstandsunterschiede zwischen den Wälzkörpern durch das Einlageelement ausgeglichen werden können. Dies hat neben einer Gewichts- und Materialeinsparung den weiteren Vorteil, dass durch das dünnere erste und/oder zweite Seitenteil und/oder Stegelement gerade bei großen Wälzlagern mehr Wälzkörper in dem Wälzlager untergebracht werden können, wodurch eine Leistungsfähig und/oder eine Lebensdauer des Wälzlagers erhöht werden kann.

Wie oben erwähnt erstreckt sich die Ausnehmung durch die gesamte Wanddicke des Stegelements. Zudem kann sich die die Ausnehmung auch durch die gesamte Wanddicke des Seitenteils erstrecken. Alternativ kann sich die Ausnehmung auch nur teilweise durch die Wanddicke des Seitenteils erstrecken und beispielsweise als eine Art Sackloch ausgebildet sein. Weiterhin kann der Lagerkäfig auf den Wälzkörpern geführt werden oder alternativ kann der Lagerkäfig die Wälzkörper führen. Ferner kann ein Einlageelement in mehr als einer Ausnehmung, beispielsweise in zwei Ausnehmungen, aufgenommen sein.

Bevorzugt kann das Einlageelement eine Form aufweisen, die zur Führung des Wälzkörpers und/oder des Lagerkäfigs geeignet ist. Beispielsweise kann das Einlegeelement dazu ausgebildet sein, mit dem Wälzkörper in Kontakt zu kommen. Ferner kann das Einlageelement an einer Seite, die dem Wälzkörper zugewandt ist, im Bereich der Wälzkörperanlagefläche mit einer von der des in der Tasche aufnehmbaren Wälzkörpers abhängigen Form und/oder mit einer Strukturierung versehen sein. Ferner kann das Einlageelement auch ausgebildet sein, eine Laufbahnführung für den Lagerkäfig bereitzustellen. Die Kombination aus Lagerkäfig und Einlageelement ermöglicht, dass die unterschiedlichen Anforderungen, die an einen Lagerkäfig gestellt werden, auf zwei Komponenten aufgeteilt werden können. Dabei kann insbesondere der Lagerkäfig als Rahmen und Grundgerüst dienen, der verhältnismäßig einfach und günstig herstellbar ist, wohingegen das Einlageelement dazu ausgebildet sein kann, den Lagerkäfig an unterschiedliche Wälzkörpergeometrien anzupassen.

Gemäß einer weiteren Ausführungsform ist das Einlageelement dazu ausgelegt, eine Bemaßung der Käfigtasche an den aufgenommenen Wälzkörper anzupassen. Bevorzugt ist eine Dicke des Einlageelements verschieden von einer Dicke des ersten Seitenteils und/oder des zweiten Seitenteils und/oder einem Stegelement. Beispielsweise kann, wenn das Einlageelement an einem der Seitenteile des Lagerkäfigs angeordnet ist, eine Länge des Wälzkörpers ausgeglichen werden, und wenn das Einlageelement an einem Stegelement angeordnet ist, kann ein Durchmesser des Wälzkörpers ausgeglichen werden. Dadurch kann zum Beispiel ein standardisiertes Käfiggrundgerüst für unterschiedlich große Wälzkörper verwendet werden, so dass es nicht notwendig ist, für jede Wälzkörpergrö-ße einen entsprechendes Käfiggrundgerüst vorzusehen. Stattdessen kann der Unterschied in den Geometrien zwischen dem Wälzkörper und der gebildeten Tasche durch das Einlageelement ausgeglichen werden. Insbesondere kann dadurch auch auf schnelle und einfache Weise ein Prototyp hergestellt werden.

Alternativ oder zusätzlich zur Führung des Lagerkäfigs und/oder Wälzkörpers kann das Einlageelement als Schmiermittelspeicher ausgebildet sein, wobei vorzugsweise die Oberfläche des Einlageelements mit einer Strukturierung versehen ist, und/oder wobei vorzugsweise das Einlageelement aus einem Festschmierstoffmaterial hergestellt ist. Beispielsweise kann das Einlageelement aus einem schwammartigen Material, einem porenaufweisenden Material und/oder einem gesinterten Material hergestellt sein, das ferner dazu ausgebildet sein kann, ein Schmiermittel, beispielsweise in seinen Poren, zu speichern. Ferner kann das Einlageelement zumindest eine erste Zone und eine zweite Zone aufweisen, wobei sich die Zonen in zumindest einer Funktionseigenschaft unterscheiden. Beispielsweise kann eine Zone dazu ausgebildet sein, Schmiermittel zu speichern, und eine weitere Zone kann als Dämpfungselement ausgebildet sein. Insbesondere können sich die erste und die zweite Zone aus unterschiedlichen Materialen hergestellt sein.

Gemäß einer weiteren bevorzugten Ausführungsform ist das Einlageelement als Dämpfungselement ausgebildet, wobei vorzugsweise das Einlageelement aus einem elastischen Material hergestellt ist. Beispielsweise kann das Einlageelement aus einem harten abriebfesten Schaumstoff sein. Dies ermöglicht Stöße und/oder Schläge auf den Wälzkörper zu reduzieren, da kein Stahl - Stahl Kontakt zustande kommt. Dadurch kann vorteilhafterweise, insbesondere bei großen und/oder schweren Wälzkörpern, verhindert werden, dass benachbarte Wälzkörper und/oder der Lagerkäfig beschädig werden, da Materialabplatzer reduziert werden können.

Bevorzugt ist das Einlageelement in der zumindest einen Ausnehmung lösbar oder unlösbar befestigt. Beispielsweise können gängige Fügeverfahren verwendet werden, um das Einlageelement in der zumindest einen Ausnehmung verliersicher zu befestigen. Beispielsweise kann das zumindest eine Einlageelement in der zumindest einen Ausnehmung formschlüssig, kraftschlüssig und/oder stoffschlüssig befestigt sein. Beispielsweise kann das Einlageelement durch Einklipsen, Kleben, Umspritzen, Einspritzen und/oder Schwei-ßen befestigt werden.

Ferner kann das Einlageelement aus einem Metall, vorzugsweise aus Messing und/oder Stahl, und/oder aus einem Kunststoff, insbesondere einem abriebfesten Kunststoff, hergestellt sein. Dies ermöglicht vorteilhafterweise ein Einlageelement mit einer hohen Festigkeit bereitzustellen. Alternativ oder zusätzlich kann das Einlageelement auch aus einem anderen Material, wie beispielsweise Holz, Filz, Keramik, etc. hergestellt sein. Bevorzugt kann das zumindest eine Einlageelement geschnitten, insbesondere lasergeschnitten, gestanzt und/oder genibbelt sein, wodurch wiederum nur geringe Werkzeugkosten entstehen. Alternativ oder zusätzlich kann das Einlageelement mit Poren versehen sein, z.B. aus einem Guss- oder Sinterwerkstück hergestellt sein, so dass es aufgrund seiner Poren Schmiermittel speichern kann und somit als Schmiermittelspeicher ausgebildet sein kann.

Wie oben erwähnt ist die zumindest eine Ausnehmung in dem Stegelement und optional in dem zumindest einen Seitenteil als eine Aussparung oder einer Ausklinkung ausgebildet. Bei einer Aussparung handelt es sich insbesondere um eine Ausnehmung, die durch die gesamte Wanddicke des Seitenteils und/oder Stegelements hindurchgeht, wobei das Material des Seitenteils und/oder Stegelements einen geschlossenen Rahmen um die Aussparung bildet. Im Gegensatz dazu bildet bei einer Ausklinkung das Material keinen geschlossenen Rahmen, sondern ist zumindest an einer Seite offen, so dass bei einer Ausklinkung das Einlageelement auch durch Einschieben in die Ausnehmung eingesetzt werden kann.

Gemäß einem weiteren Aspekt wird ein Einlageelement für einen voranstehend beschriebene Lagerkäfig vorgeschlagen.

Gemäß noch einem weiteren Aspekt wird ein Wälzlager, insbesondere ein Großwälzlager, mit mindestens einem Innenring und mindestens einem Außenring vorgeschlagen, wobei zwischen dem Innenring und dem Außenring Wälzkörper angeordnet sind, wobei die Wälzkörper durch einen oben beschriebenen Lagerkäfig gehalten werden.

Weitere Vorteile und vorteilhafte Ausführungsformen sind in der Beschreibung, den Zeichnungen und den Ansprüchen angegeben. Dabei sind insbesondere die in der Beschreibung und in den Zeichnungen angegebenen Kombinationen der Merkmale rein exemplarisch, so dass die Merkmale auch einzeln oder anders kombiniert vorliegen können.

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigen:
Fig. 1: eine schematische Ansicht eines Teils eines Lagerkäfigs gemäß einer ersten Ausführungsform;
Fig. 2: eine schematische Schnittansicht durch den Lagerkäfig der Fig. 1, und
Fig. 3: eine perspektivische Ansicht des Einlageelements der Fig. 2.

Im Folgenden werden gleiche oder funktionell gleichwirkende Elemente mit denselben Bezugszeichen gekennzeichnet.

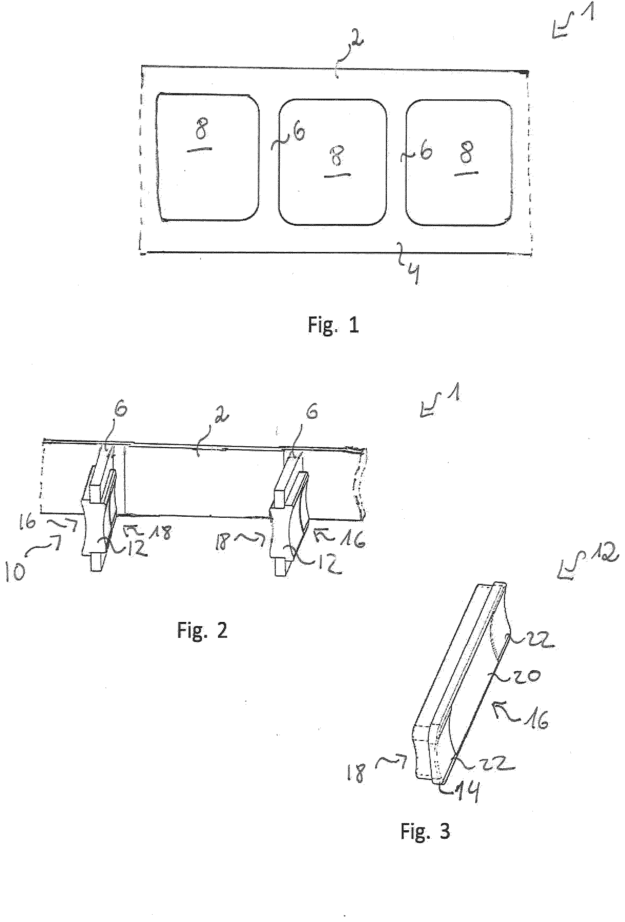

Fig. 1 bis 3 zeigen einen Lagerkäfig 1 gemäß einer Ausführungsform, der insbesondere für Großwälzlager geeignet ist. Der Lagerkäfig 1 hat Käfiggrundgerüst mit einem ersten Seitenteil 2, einem zweiten Seitenteil 4 und mehreren Stegelementen 6, die die Seitenteile 2, 4 verbinden. Dabei bilden die Seitenteile und die Stegelemente Käfigtaschen 8, die dazu ausgelegt sind, zumindest einen Wälzkörper (nicht dargestellt) aufzunehmen. Der Lagerkäfig 1 kann beispielsweise in einem Rollenlager eingesetzt werden, d.h. in einem Wälzlager mit rollenförmigen Wälzkörpern, wie zum Beispiel Kegelrollen, Zylinderrollen, Tonnen, Nadeln, und dergleichen. Bevorzugt ist der Lagerkäfig aus Metall, insbesondere Metallblech, und/oder aus Kunststoff gebildet. Ferner kann der Lagerkäfig aus einem massiven Material gebildet sein.

Um das Käfiggrundgerüst des Lagerkäfigs 1 flexibler an die gestellten Anforderungen anpassen zu können, weisen die Stegelemente 6 eine Ausnehmung 10 (Fig. 2) auf, in der ein Einlageelement 12 (Fig. 2) aufgenommen ist, das dazu ausgelegt ist, zumindest den aufgenommenen Wälzkörper zu kontaktieren. Zusätzlich können auch das erste und/oder zweite Seitenteil 2, 4 mit einer Ausnehmung 10 und einem Einlageelement 12 versehen sein.

Die Ausnehmung 10 ist in dem gezeigten Ausführungsbeispiel als eine Aussparung gebildet, in die das Einlageelement 4 eingesetzt werden kann. Alternativ kann die Ausnehmung auch als einer Ausklinkung, in die das Einlageelement 12 eingeschoben werden kann, ausgebildet sein. In der Ausnehmung 10 kann das Einlageelement 12 mit einem gängigen Fügeverfahren, beispielsweise formschlüssig, kraftschlüssig und/oder stoffschlüssig befestigt werden. Auch kann das Einlageelement 12 in der Ausnehmung 10 lösbar oder unlösbar befestigt sein. Beispielsweise kann das Einlageelement durch Einklipsen, Kleben und/oder Schweißen befestigt werden. In der gezeigten Ausführungsform erstreckt sich die Ausnehmung 10 durch die gesamte Wanddicke des Stegelements 6.

In die Ausnehmung ist, wie in Fig. 2 zu sehen ist, das Einlageelement 12, das genauer in Fig. 3 dargestellt ist, eingesetzt. Dazu weist das Einlageelement 12 eine umlaufende Auskragung 14 auf, mit der das Einlageelement 12 an dem Stegelement 6 anliegt und dadurch in der Ausnehmung 10 gehalten wird. Selbstverständlich können auch andere Ausgestaltungen als eine umlaufende Auskragung 14 zum Einsatz kommen, um das Einlageelement 12 in der Ausnehmung 10 zu halten. Beispielsweise können statt einer umlaufenden Auskragung 14 auch mehrere separaten Auskragungen vorgesehen sein. Ist die Ausnehmung 10 als eine Ausklinkung ausgeführt, kann auch eine Nut, entweder in dem Einlageelement oder der Ausnehmung vorgesehen sein, in die eine entsprechende Auskragung eingeschoben werden kann.

Um das Käfiggrundgerüst des Lagerkäfigs 1 an andere Anforderungen, wie beispielsweise neue Wälzkörper, anzupassen, ist das Einlageelement 12 dazu ausgebildet, mit dem Wälzkörper in Kontakt zu kommen und beispielsweise den Wälzkörper in der Tasche 8 an einer gewünschten Position zu halten bzw. zu verhindern, dass der Lagerkäfig 1 im Gebrauch radial nach außen wandert. Dazu sind die Flächen 16, 18 des Einlageelement 12, die im Gebrauch dem Wälzkörper zu gewandt sind, im Bereich der Wälzkörperanlagefläche mit einer Krümmung versehen. In diesem Fall kann durch eine Änderung des Einlageelements 12 eine Änderung der Lagerkäfigführung, beispielsweise von einer Laufbahnführung zu einer Wälzkörperführung, vorgenommen werden.

Zusätzlich oder alternativ können diese Flächen auch mit einer Strukturierung versehen sein, um beispielsweise eine Schmiermittelzufuhr an den Wälzkörper zu verbessen. Die Dicke des Einlageelements 12 unterscheidet sich von der Dicke des Stegelements 6 und/oder der Seitenteile 2, 4, so dass vorteilhafterweise ein Abstand zwischen dem Wälzkörper und dem Lagerkäfig 1 ausgeglichen werden kann.

Das Einlageelement 12 ist bevorzugt aus einem abriebfesten Stoff hergestellt, wie beispielsweise aus einem Metall, vorzugsweise aus Messing und/oder Stahl, und/oder aus einem Kunststoff. Alternativ oder zusätzlich kann das Einlageelement 12 Poren aufweisen. Beispielsweise kann das Einlageelement 12 aus einem Guss- oder Sinterwerkstück hergestellt sein, so dass es aufgrund der Poren Schmiermittel speichern kann und somit als Schmiermittelspeicher dient. In diesem Fall dient das Einlageelement 12 als ein Verschleißteil, dass ausgetauscht werden kann, wenn das in dem Einlageelement 12 gespeicherte Schmiermittel aufgebraucht ist. Ferner kann das Einlageelement 12 auch aus einem Festschmierstoffmaterial gebildet sein.

Je nach Material des Einlageelements 12 kann das Einlageelement 12 auch dämpfende Eigenschaften haben und als Dämpfungselement, das Stöße und/oder Schläge auf den Wälzkörper reduziert, ausgebildet sein. Dazu kann das Einlageelement 12 aus einem harten abriebfesten Schaumstoff hergestellt sein. Bevorzugt kann das Einlageelement 12 geschnitten, insbesondere lasergeschnitten, gestanzt und/oder genibbelt sein, wodurch wiederum nur geringe Werkzeugkosten entstehen.

Wie weiterhin in Fig. 3 gesehen werden kann, hat das Einlageelement 12 in dem dargestellten Ausführungsbeispiel eine erste Zone 20 und zwei zweite Zonen 22. Die beiden Zonen 20, 22 unterscheiden sich insbesondere in einer Materialeigenschaft voneinander. Beispielsweise ist die erste Zone 20 dazu ausgebildet, Schmiermittel zu speichern, und die zweiten Zonen 22 sind als Dämpfungselemente ausgebildet.

Zusammenfassend wird vorgeschlagen, einen Lagerkäfig 1 mit Ausnehmungen 10 in den Stegelementen 6 zu versehen, in die separates Einlageelemente 12 eingesetzt sind. Dies ermöglicht ein Käfiggrundgerüst bereitzustellen, das aus den Seitenteilen 2, 4 und den Stegelemente 6 gebildet ist, und das durch die Einlageelemente 12 an die individuellen Anforderungen an den Lagerkäfig 1 angepasst werden kann.

### Bezugszeichenliste

- 1: Lagerkäfig
- 2: Seitenteil
- 4: Seitenteil
- 6: Stegelement
- 8: Tasche
- 10: Ausnehmung
- 12: Einlageelement
- 14: Auskragung
- 16, 18: Fläche
- 20, 22: Zone

## Patentansprüche

1. Lagerkäfig (1), insbesondere für Großwälzlager, mit einem ersten und einem zweiten Seitenteil (2, 4) und mehreren die Seitenteile verbindenden Stegelementen (6), wobei die Seitenteile (2, 4) und die Stegelemente (6) Käfigtaschen (8) bilden, die dazu ausgelegt sind, Wälzkörper aufzunehmen, **dadurch gekennzeichnet, dass** die Stegelemente (6) zumindest eine Ausnehmung (10) aufweisen, die als eine Aussparung oder Ausklinkung ausgebildet ist, die sich durch die gesamte Wanddicke des jeweiligen Stegelements (6) erstreckt, wobei in der Ausnehmung (10) ein Einlageelement (12) aufgenommen ist, das dazu ausgelegt ist, die in den Taschen aufgenommenen Wälzkörper zu kontaktieren, und das Einlageelement (12) Wälzkörperanlageflächen (16; 18) aufweist, die im Gebrauch jeweils den in den Taschen aufgenommenen Wälzkörpern zugewandt sind und im Bereich der Wälzkörperanlageflächen (16; 18) mit einer Krümmung versehen sind.

2. Lagerkäfig (1) gemäß Anspruch 1, wobei zumindest ein Seitenteil (2;4) zumindest eine Ausnehmung (10) aufweist, in der ein Einlageelement (12) aufgenommen ist, das dazu ausgelegt ist, die in den Taschen aufgenommen Wälzkörper zu kontaktieren.

3. Lagerkäfig gemäß Anspruch 1 oder 2, wobei das Einlageelement (12) eine Form die zur Führung des Wälzkörpers und/oder des Lagerkäfigs (1) geeignet ist.

4. Lagerkäfig (1) gemäß einem der vorhergehenden Ansprüche, wobei das Einlageelement (12) dazu ausgelegt ist, eine Bemaßung der Käfigtasche (8) an den aufgenommenen Wälzkörper anzupassen.

5. Lagerkäfig (1) gemäß einem der vorherigen Ansprüche, wobei eine Dicke des Einlageelements (12) verschieden von einer Dicke des ersten Seitenteils (2) und/oder des zweiten Seitenteils (4) und/oder des Stegelements (6) ist.

6. Lagerkäfig (1) gemäß einem der vorherigen Ansprüche, wobei das Einlageelement (12) als Schmiermittelspeicher ausgebildet, wobei vorzugsweise die Oberfläche des Einlageelements (12) mit einer Strukturierung versehen ist, und/oder das Einlageelement (12) aus einem Festschmierstoffmaterial hergestellt ist.

7. Lagerkäfig (1) gemäß einem der vorherigen Ansprüche, wobei das Einlageelement (12) als Dämpfungselement ausgebildet ist, wobei vorzugsweise das Einlageelement (12) aus einem elastischen Material hergestellt ist.

8. Lagerkäfig (1) gemäß einem der vorherigen Ansprüche, wobei das Einlageelement (12) in der zumindest einen Ausnehmung (10) lösbar oder unlösbar befestigt ist.

9. Lagerkäfig (1) gemäß einem der vorherigen Ansprüche, wobei das Einlageelement (12) aus einem Metall, vorzugsweise aus Messing und/oder Stahl, und/oder aus einem Kunststoff hergestellt ist, wobei das zumindest eine Einlageelement (12) vorzugsweise geschnitten, insbesondere lasergeschnitten, gestanzt und/oder genibbelt ist.

10. Lagerkäfig (1) gemäß einem der vorherigen Ansprüche, wobei das Einlageelement (12) zumindest eine erste Zone (20) und eine zweite Zone (22) aufweist, wobei sich die Zonen (20, 22) in zumindest einer Funktionseigenschaft unterscheiden.

11. Lagerkäfig (1) gemäß einem der vorherigen Ansprüche, wobei der Lagerkäfig (1) aus Metall, insbesondere Metallblech, und/oder aus Kunststoff gebildet ist.

12. Lagerkäfig (1) gemäß einem der vorherigen Ansprüche, wobei der Lagerkäfig (1) einteilig oder mehrteilig ausgebildet ist.

13. Einlageelement (12) für einen Lagerkäfig (1) gemäß einem der vorherigen Ansprüche.

## Claims

1. Bearing cage (1), in particular for large-diameter rolling bearings, having a first and a second lateral part (2, 4) and a plurality of web elements (6) connecting the lateral parts, wherein the lateral parts (2, 4) and the web elements (6) form cage pockets (8) which are conceived to receive rolling elements, **characterized in that** the web elements (6) have at least one recess (10) which is formed as a recess or notch and extends through the entire wall thickness of the respective web element (6), wherein incorporated in the recess (10) is an insert element (12) which is conceived to contact the rolling elements received in the pockets, and the insert element (12) has rolling element contact surfaces (16; 18) which in use respectively face the rolling elements received in the pockets and are provided with a curvature in the region of the rolling element contact surfaces (16; 18).

2. Bearing cage (1) according to Claim 1, wherein at least one lateral part (2; 4) has at least one recess (10) in which is received an insert element (12) that is conceived to contact the rolling elements received in the pockets.

3. Bearing cage according to Claim 1 or 2, wherein the insert element (12) has a shape which is suitable for guiding the rolling element and/or the bearing cage (1).

4. Bearing cage (1) according to one of the preceding claims, wherein the insert element (12) is conceived to adapt a dimension of the cage pocket (8) to the received rolling element.

5. Bearing cage (1) according to one of the preceding claims, wherein a thickness of the insert element (12) differs from a thickness of the first lateral part (2) and/or the second lateral part (4) and/or the web element (6).

6. Bearing cage (1) according to one of the preceding claims, wherein the insert element (12) is designed as a lubricant reservoir, wherein preferably the surface of the insert element (12) is provided with a structuring, and/or the insert element (12) is produced from a solid lubricant material.

7. Bearing cage (1) according to one of the preceding claims, wherein the insert element (12) is designed as a damping element, wherein preferably the insert element (12) is produced from an elastic material.

8. Bearing cage (1) according to one of the preceding claims, wherein the insert element (12) is releasably or non-releasably fastened in the at least one recess (10).

9. Bearing cage (1) according to one of the preceding claims, wherein the insert element (12) is produced from a metal, preferably from brass and/or steel, and/or from a plastics material, wherein the at least one insert element (12) is preferably cut, in particular laser-cut, punched and/or nibbled.

10. Bearing cage (1) according to one of the preceding claims, wherein the insert element (12) has at least one first zone (20) and one second zone (22), wherein the zones (20, 22) differ in terms of at least one functional property.

11. Bearing cage (1) according to one of the preceding claims, wherein the bearing cage (1) is formed from metal, in particular metal sheet, and/or from plastics material.

12. Bearing cage (1) according to one of the preceding claims, wherein the bearing cage (1) formed integrally or in multiple parts.

13. Insert element (12) for a bearing cage (1) according to one of the preceding claims.

## Revendications

1. Cage (1) de palier , en particulier pour des paliers à roulement de grande dimension, avec une première et une seconde partie latérale (2, 4) et plusieurs éléments d'entretoise (6) reliant les parties latérales, les parties latérales (2, 4) et les éléments d'entretoise (6) formant des compartiments (8) de cage, qui sont conçus pour recevoir des corps de roulement, **caractérisée en ce que** les éléments d'entretoise (6) comportent au moins un renfoncement (10) qui est formé comme un évidement ou une encoche, qui s'étend à travers la totalité de l'épaisseur de paroi de l'élément d'entretoise (6) respectif, un élément d'insertion (12) étant reçu dans le renfoncement (10), lequel est conçu pour mettre en contact les corps de roulement reçus dans les compartiments, et l'élément d'insertion (12) comportant des surfaces d'appui (16 ; 18) de corps de roulement, qui sont tournées en utilisation chacune vers les corps de roulement reçus dans les compartiments et qui sont pourvues d'une incurvation dans la zone des surfaces d'appui (16 ; 18) de corps de roulement.

2. Cage (1) de palier selon la revendication 1, au moins une partie latérale (2 ; 4) comportant au moins un renfoncement (10), dans lequel un élément d'insertion (12) est reçu, qui est conçu pour mettre en contact les corps de roulement reçus dans les compartiments.

3. Cage de palier selon la revendication 1 ou 2, l'élément d'insertion (12) présentant une forme qui est adaptée pour guider le corps de roulement et/ou la cage (1) de palier.

4. Cage (1) de palier selon l'une des revendications précédentes, l'élément d'insertion (12) étant conçu pour adapter une dimension des compartiments (8) de cage aux corps de roulement reçus.

5. Cage (1) de palier selon l'une des revendications précédentes, une épaisseur de l'élément d'insertion (12) étant différente d'une épaisseur de la première partie latérale (2) et/ou de la seconde partie latérale (4) et/ou de l'élément d'entretoise (6).

6. Cage (1) de palier selon l'une des revendications précédentes, l'élément d'insertion (12) étant formé comme un accumulateur de lubrifiant, la surface de l'élément d'insertion (12) étant de préférence pourvue d'une structuration, et/ou l'élément d'insertion (12) étant fabriqué à partir d'un matériau lubrifiant solide.

7. Cage (1) de palier selon l'une des revendications précédentes, l'élément d'insertion (12) étant formé comme un élément d'amortissement, l'élément d'insertion (12) étant fabriqué de préférence à partir d'un matériau élastique.

8. Cage (1) de palier selon l'une des revendications précédentes, l'élément d'insertion (12) étant fixé de manière amovible ou de manière inamovible dans l'au moins un renfoncement (10).

9. Cage (1) de palier selon l'une des revendications précédentes, l'élément d'insertion (12) étant fabriqué à partir d'un métal, de préférence à partir de laiton et/ou d'acier, et/ou à partir d'une matière plastique, l'au moins un élément d'insertion (12) étant de préférence découpé, en particulier découpé au laser, estampé et/ou rogné.

10. Cage (1) de palier selon l'une des revendications précédentes, l'élément d'insertion (12) comportant au moins une première zone (20) et une seconde zone (22), les zones (20, 22) se distinguant dans au moins une propriété fonctionnelle.

11. Cage (1) de palier selon l'une des revendications précédentes, la cage (1) de palier étant formée à partir de métal, en particulier de tôle métallique et/ou à partir de matière plastique.

12. Cage (1) de palier selon l'une des revendications précédentes, la cage (1) de palier étant formée en une partie ou en plusieurs parties.

13. Elément d'insertion (12) pour une cage (1) de palier selon l'une des revendications précédentes.
